# EUROPEAN PATENT APPLICATION

(11) **EP 2 523 090 A2**
(43) Date of publication of application: **14.11.2012**
(21) Application number: 12162258.3
(22) Date of filing: 29.03.2012
(51) Int. Cl.: G06F 3/048, G06F 9/44

(54) **Mobile terminal and method for controlling screen thereof**

(30) Priority: 11.05.2011 KR 20110043753
(71) Applicant: Samsung Electronics Co., Ltd., Suwon-si, Gyeonggi-do, 443-742 (KR)
(72) Inventor: Yook, Hyung Min, Gyeonggi-do (KR); Hwang, Jae Joon, Gyeonggi-do (KR)
(74) Representative: Jenkins, Richard Gavin

(57) **Abstract**

A mobile terminal and a method for controlling a screen thereof are provided. A plurality of tasks is classified in categories such as an event log and a timeline. The screen is divided into a main screen area in which a main screen image such as a home screen is displayed, and a sub screen area in which a task list associated with one of the categories is displayed. The task list displayed on the sub screen area is substituted with a task list of another category when a change command occurs, while the main screen image can be maintained unchanged. The sub screen area can be enlarged and additional tasks of the same category displayed upon sensing a sub screen enlargement command.

## Description

### BACKGROUND OF THE INVENTION

### Field of the Invention

The present invention relates to a mobile terminal and a method for controlling a screen thereof. More particularly, the invention relates to a mobile terminal that allows a user to easily recognize a list of various tasks and to quickly access a corresponding application of a selected task; and a method for controlling a screen thereof.

### Description of the Related Art

The market for mobile terminals has expanded dramatically in recent years as new designs and applications have stoked demand. In particular, new smart phones may download and install various applications (so-called "apps") from an on-line marketplace. Such capability did not exist with older, limited functionality mobile phones. The mobile terminal may also allow for multi-tasking, enabling the simultaneous performance of various tasks. For example, a user may perform a web surfing operation while listening to music; receive a text or email message while watching a movie; etc.

Accordingly, a mobile terminal requires an interface technology that allows a user to quickly launch a corresponding application of a desired task. To do this, the mobile terminal generally includes a touch screen. Further, in the mobile terminal, a display area is divided into a main screen area and a sub screen area. The sub screen area may contain icons for a user's favorite applications or for a currently executed application, to facilitate interaction with a user.

While current interface technology effectively facilitates user selection of applications, it is desired to enhance the user experience by providing a flexible interface technology that allows a user to easily recognize tasks and launch applications under a variety of conditions.

### SUMMARY OF THE INVENTION

The present invention provides a method for controlling a mobile terminal screen that allows a user to easily view a variety of tasks, and a mobile terminal implementing the same.

The present invention further provides a method for controlling a screen providing a flexible interface and a mobile terminal implementing the same.

In accordance with the present invention, a mobile terminal and a method for controlling a screen thereof are provided. A plurality of tasks is classified in categories. The screen is divided into a main screen area and a sub screen area. A main screen image such as a home screen is displayed in the main screen area. In the sub screen area, a task list associated with one of the categories is displayed. The task list is substituted with a task list of a different category when a change command occurs. In one aspect, the substitution of the task list occurs while the main screen image is maintained unchanged, such that a user can scroll through task lists of different categories in the sub screen area.

In another aspect, the categories of task lists include one or more of an event log and a timeline.

In yet another aspect, the sub screen area is enlarged upon sensing a touch operation for a sub screen enlargement command, and additional tasks of the same category are displayed in the enlarged sub screen area.

### BRIEF DESCRIPTION OF THE DRAWINGS

The above features and advantages of the present invention will be more apparent from the following detailed description in conjunction with the accompanying drawings, in which:
FIG. 1 is a block diagram illustrating a configuration of a mobile terminal according to an exemplary embodiment of the present invention;
FIG. 2 is a view illustrating a screen of a mobile terminal according to an exemplary embodiment of the present invention;
FIG. 3 is a block diagram illustrating a main storage unit of a mobile terminal according to an exemplary embodiment of the present invention;
FIG. 4 is a view illustrating a method for changing a task list according to an exemplary embodiment of the present invention;
FIG. 5 is a view illustrating a method for generating favorites according to an exemplary embodiment of the present invention;
FIG. 6 is a view illustrating a method for changing a task list according to another embodiment of the present invention;
FIG. 7 to FIG. 9 are views illustrating a method for enlarging a sub screen according to an exemplary embodiment of the present invention;
FIG. 10 is a view illustrating a method for enlarging a sub screen according to another embodiment of the present invention; and
FIG. 11 is a flowchart illustrating a method for controlling a screen according to an exemplary embodiment of the present invention.

### DETAILED DESCRIPTION OF THE INVENTION

Exemplary embodiments of the present invention are described with reference to the accompanying drawings in detail. The same reference numbers are used throughout the drawings to refer to the same or like parts. For the purposes of clarity and simplicity, detailed descriptions of well-known functions and structures incorporated herein may be omitted to avoid obscuring the subject matter of the present invention.

A mobile terminal according to an embodiment of the present invention is a touch screen terminal which can be any one of various information communication devices, multi-media devices such as a tablet PC, a portable phone, a smart phone, and so on.

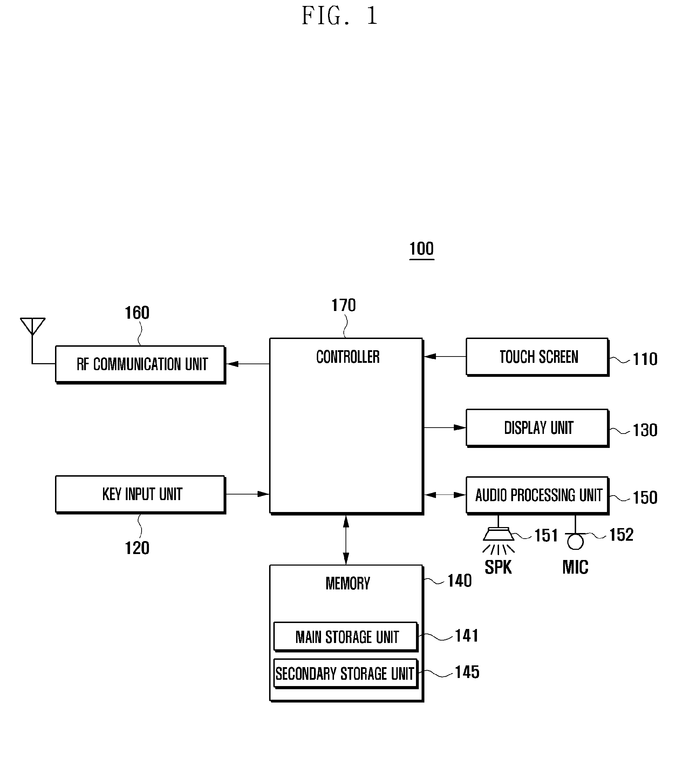

FIG. 1 is a block diagram illustrating a configuration of a mobile terminal according to an exemplary embodiment of the present invention.

Referring to FIG. 1, a mobile terminal 100 includes a touch screen 110, an input unit 120, a display unit 130, a memory 140, an audio processing unit 150, a speaker 151, a microphone 152, a radio frequency (RF) communication unit 160, and a controller 170.

The touch screen 110 transfers a touch signal to the controller 170. The touch signal may be divided into three types: touch & drop, drag & drop (referred to as 'drag' hereinafter), and flick & drop (referred to as 'flick' hereinafter). Here, touch & drop refers to an operation of touching one point on the screen with a finger, then lifting the finger from that point. Drag refers to an operation of sliding a finger while touching the screen, and then lifting the finger. Flick refers to an operation of sliding a finger quickly along the screen and then lifting the finger. The controller 170 may distinguish a flick from a drag based on the sliding (moving) speed.

The touch screen 110 can be a resistive type, a capacitive type or a pressure type touch screen.

The key input unit 120 is configured by a plurality of keys for operation, and transfers a key signal to the controller 170. Here, the key signal may be e.g. a power on/off signal, a volume control signal, or a screen on/off signal.

The display unit 130 converts image data input from the controller 170 into an analog signal, and displays the analog signal. In particular, in accordance with an embodiment, the display unit 130 may divide a screen into two areas, and display a main screen image and a sub screen image on the two areas, respectively.

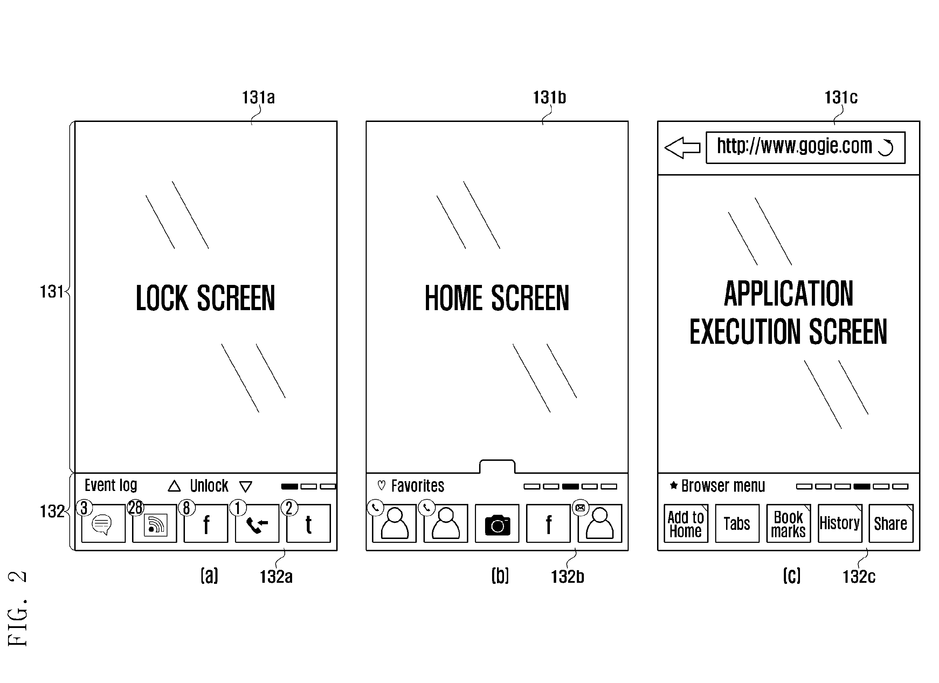

FIG. 2 is a view illustrating a screen of a mobile terminal according to an exemplary embodiment of the present invention.

Referring to FIG. 2, the display unit 130 divides a screen into a main screen area 131 and a sub screen area 132. On the main screen area 131, either a lock screen 131 a, a home screen 131b, or an application execution screen 131 c is displayed. The sub screen area 132 displays a plurality of "tasks", i.e., icons depicting executable (or already executed) tasks. The plurality of tasks may differ for different main screens, as exemplified with sub screens 132a, 132b and 132c. The lock screen 131 a is an enlarged image displayed when a screen of the display unit 131 is in a locked state. When a specific touch operation occurs, the controller 170 switches an image displayed on the screen from the lock screen 131 a to the home screen 131 b or the application execution screen 131 c. The home screen 131 b is an image including a plurality of icons for executing applications. If a user touches and drops an icon, the controller 170 executes a corresponding application and switches the displayed image from the home screen 131b to the application execution screen 131 c.

The display unit 130 further displays at least one task of a list of a plurality of tasks 132a, 132b, and 132c classified in categories under the control of the controller 170. For instance, in the example shown, plurality of tasks 132a comprise five tasks in category "event log", tasks 132b comprise five tasks in category "favorites" and tasks 132c comprise five tasks in category "Browser menu". A task list displayed on the sub screen area 132 may change when a main screen changes, or it may remain fixed despite a main screen change. If the user touches and drops one task from a task list, the display unit 130 may display a corresponding application execution screen of the touched task on the main screen area 131. Task lists in accordance with the present invention will be described with more specificity below.

The memory 140 includes a main storage unit 141 and a secondary storage unit 145. Here, the main storage unit 141 may be configured by a flash memory and the secondary storage unit 145 may be configured by a RAM.

The secondary storage unit 145 stores an Operating System (OS), various applications, and various data. Further, the secondary storage unit 145 may be divided into a data storage area and an application installation area.

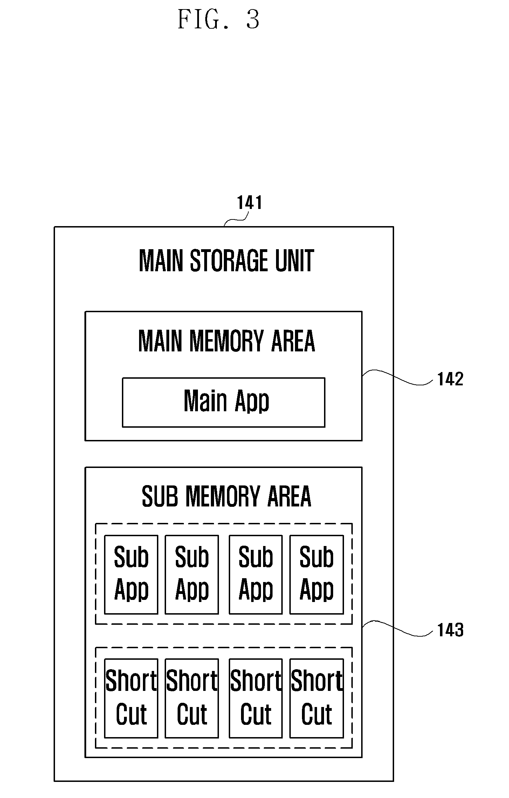

The main storage unit 141 is a space in which the OS and the application are loaded. That is, if the mobile terminal 100 is booted, the OS is executed in a loaded state from the secondary storage unit 145 to the main storage unit 141. Likewise, the application is executed in a loaded state from the secondary storage unit 145 to the main storage unit 141. If execution of a corresponding application is terminated, it is deleted from the main storage unit 141. FIG. 3 is a block diagram illustrating a main storage unit of a mobile terminal according to an exemplary embodiment of the present invention. The main storage unit 141 may be divided into a main memory area 142 storing an application displayed on a main screen area, and a sub memory area 143 storing corresponding applications of tasks displayed on a sub screen area.

If a task is selected for execution by a user, the controller 170 loads an application of the corresponding task to the main memory area 142. For example, an application stored in the sub memory area 143 may be loaded to the main memory area 142, and an application stored in the sub storage unit 145 (see FIG. 1) may likewise be loaded to the main memory area 142. Because the former is faster than the latter, faster execution is achievable by loading from the sub memory area. It is noted that when the corresponding application of the selected task is stored in the sub memory area 143, the controller 170 may execute the task without the necessity of loading it to the main memory area 142.

Further, if execution of the application is terminated, the controller 170 deletes the application from the sub storage unit 141. In this case, shortcut information of the deleted application is then stored in the sub memory area 143. Here, when a signal input to the controller 170 from the key input unit 120 is a signal requesting execution termination, a task completion condition may include implementing a corresponding application first due to a limitation in the number of loadings. Further, the shortcut information refers to task information in which a corresponding application is executed. For example, in a case of a web browser, the shortcut may be the latest accessed web address. The shortcut of a music player may be the latest played music information. The shortcut of a social network application may be the latest dialogue list with friends. Accordingly, if a user selects (i.e., touches and drops) a task of an application deleted from the main storage unit 141, the controller 170 may not display an initial screen of a corresponding application but instead displays an execution screen of the task. Thus, if the user selects a task displayed on the sub screen area 132, the controller 170 can quickly load and display an execution screen of the touched task.

With continued reference to FIG. 1, the audio processing unit 150 transmits an audio signal input from the controller 170 to a speaker 151, and transmits an audio signal such as speech input from the microphone to the controller 170. That is, the audio processing unit 150 converts and outputs speech/sound data into an audible sound, and converts an audio signal such as speech received from the microphone 152 into a digital signal and transmits the digital signal to the controller 170.

The RF communication unit 160 transmits and receives signals associated with portable phone communication, a short message service (SMS), or a Multimedia Message Service (MMS), a speech call, and data communication. Further, the RF communication unit 160 converts speech/sound data and control data into RF signals and transmits the RF signals. The RF communication unit 160 receives and converts an incoming RF signal into speech/sound data and control data and outputs the speech/sound data and the control data. The RF communication unit 160 includes an RF transmitter for up-converting the frequency of a signal for transmission and amplifying the signal, and an RF receiver for low-noise-amplifying a received signal and down-converting the frequency of the signal.

The controller 170 controls an overall operation of the mobile terminal 100 and signal flow between internal blocks of the mobile terminal 100. As mentioned earlier, embodiments of the present invention allow a user to variously view tasks, and provide a flexible interface to the user. To this end, the controller 170 may execute the functions of: changing a task list, enlarging a sub screen area; adding a task to a home screen; and adding favorites.

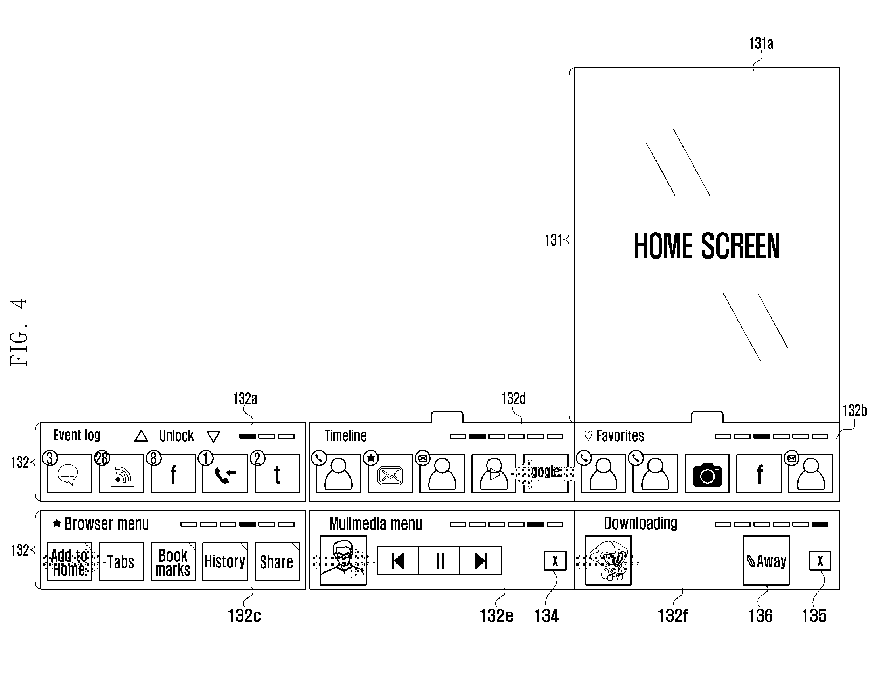

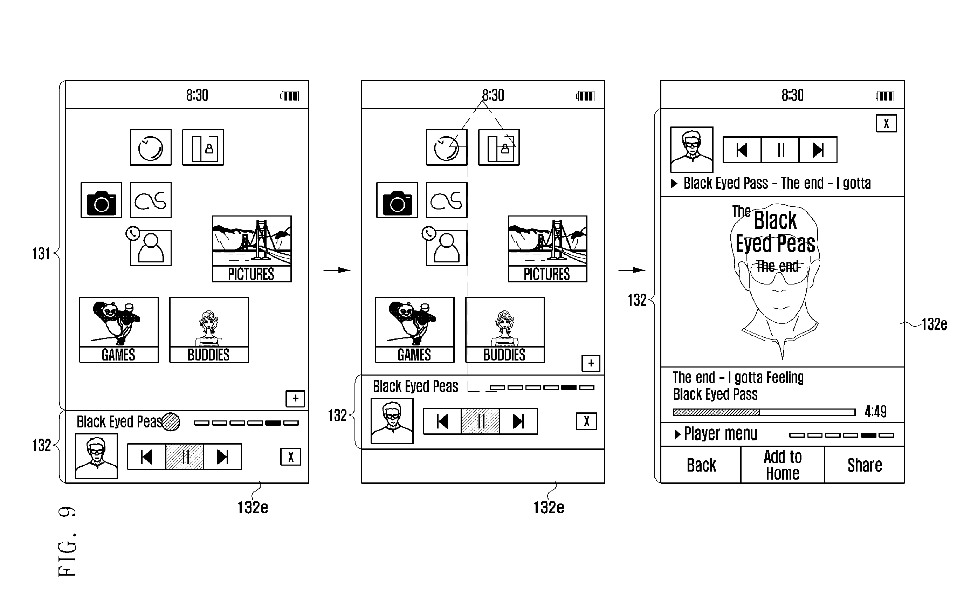

A method for controlling a screen by the controller 170 will be described with reference to FIGS. 4-11 in detail.

FIG. 4 is a view illustrating a method for changing a task list according to an exemplary embodiment of the present invention. The controller 170 controls a display unit 130 to display a main screen on a main screen area 131 and a task list on a sub screen area 132 (as was also mentioned and illustrated earlier with respect to FIG. 2). In particular, only a main screen might be displayed initially; and thereafter, the split screen (i.e., main screen area and sub screen area) may be displayed when a specific condition occurs. An example of a specific condition may be a flick or drag from a lower end of a screen to an upper end of the screen. Another example is a touch and drop of a specific icon located at the upper end of the screen (not shown in FIG. 4).

As shown in FIG. 4, while the main screen 131 is displayed, even if the image displayed therein remains constant, such as a home screen 131 a, the sub screen area 132 may change in response to user touch operations. Thus, while home screen 131 a is displayed, the sub screen area 132 may be changed (scrolled) between categories, e.g., a Favorites task list 132b can be scrolled to a Timeline task list 132d, and so forth. That is, the controller 170 changes a task list category according to a touch signal input from the touch screen 110. For example, if a touch location is a sub screen area 132 and a touch operation is a flick to a longitudinal (namely, left or right) direction, the controller 170 changes the category of the task list to be displayed on the sub screen area 132 (e.g., from Favorites 132b to Timeline 132d). Another example is the use of a drag operation to signal a category change. Further, a touch direction may change according to a location of the sub screen area 132. For instance, instead of the sub screen area 132 being horizontally located on the screen as shown in FIG. 4, it may alternatively be vertically located on a side surface of the screen. In this case, a touch direction for changing the task list may be the vertical direction.

If a user touches and drops a task located at the sub screen area 132, the controller 170 controls the display unit 130 to display an execution screen of the touched task on the main screen area 131.

The controller 170 may classify tasks into an event log 132a, favorites 132b, an application execution menu 132c, a timeline 132d, a multimedia execution menu 132e, and a downloading menu 132f in categories. Moreover, the controller 170 may arrange tasks of the task list in an order as shown in FIG. 4. That is, the controller 170 may display a title such as "Event log", "Timeline", etc. at an upper end of a corresponding category list such that a user may recognize the type of the task list.

Exemplary tasks of a task list will now be explained with reference to FIG. 4 in detail. First, an event log 132a refers to a list of events, with each event referring to an application action that occurred. More specifically, the event log 132a may be configured by tasks reporting an event in which a call application, a short message application, a Social Network Service (SNS) application, or a rich site summary (RSS) application is generated. Here, the event may be a missed call, message reception, Twitter®, a friend's message on an SNS such as Facebook®, RSS information, or an application update prompt. If a new event occurs or a user checks an event, the controller 170 updates the corresponding task. For example, if a message is received, the controller 170 updates a task reporting the number of received messages not yet checked by the user. If the user has checked all the received messages, the controller 170 may delete the corresponding task from the event log 132a.

The timeline 132d is a list of tasks executed by a user. That is, the controller 170 updates tasks executed by the user in the timeline 132d. Further, the controller 170 may arrange the tasks in the timeline 132d in an order of an executed time. Here, the earliest implemented task in order is squeezed out due to a limitation in space so that it may not be displayed. For example, referring to FIG. 4, only five tasks are displayed but other, remaining tasks are not displayed. The controller 170 may enlarge the sub screen area 132 to display the remaining tasks. When there are no spaces to add tasks to a previous timeline, the controller 170 may create an additional (extended) timeline and arrange a currently executed task in the extended timeline. In extending the timeline, the controller 170 substitutes a timeline displayed on the sub screen area 132 with another timeline according to a touch operation. At this time, the controller 170 may assign numbers (e.g., timeline 2-1, timeline 2-2) to respective timelines such that a user may recognize the order of the timelines. In the meantime, if execution of an application is terminated, the controller 170 may delete a task of a corresponding application from a timeline 132d. As mentioned previously, a task completion condition may be a termination request or restriction due to the mobile terminal's application loading capacity.

The favorites 132b is a list of tasks designated by a user, and which may include tasks in the timeline 132d. That is, the favorites 132b may be a task list that collects tasks frequently executed by the user. Accordingly, the user touches and drops tasks of the favorites 132b to initiate execution of the corresponding task.

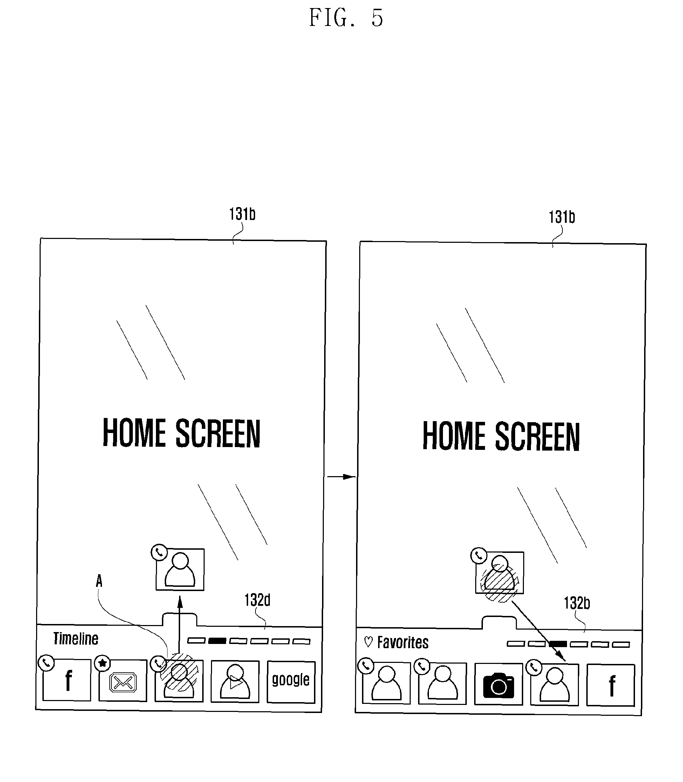

FIG. 5 is a view illustrating a method for generating favorites according to an exemplary embodiment of the present invention. If a user drags one task A existing in the timeline 132d to a home screen 131 b direction, the controller 170 copies or moves a corresponding task to the home screen 131 b. Here, the controller 170 may distinguish movement from copy based on a hold time. For example, if the time period for which the user touches the corresponding task without dragging the task exceeds a predetermined time period, the controller 170 copies the corresponding task to the home screen 131b. If the user's finger is lifted from the screen within a predetermined time-period, the controller 170 moves the corresponding task to the home screen 131 b.

Meanwhile, if the user drags a task A existing in the home screen 131b to the favorites 132b, the controller 170 copies or moves the corresponding task to the favorites 132b. If the user drags one task existing in the timeline 132d to a home screen 131 b, the controller 170 moves or copies a corresponding task to the home screen 131 b and adds the corresponding task to the favorites 132b simultaneously. Further, the controller 170 may delete tasks of the favorites 132b according to a request of the user.

Moreover, the controller 170 may arrange tasks in the favorites 132b in the order in which tasks were most recently added. Accordingly, earlier added tasks in the order may not be displayed due to space restriction. However, more tasks may be displayed by enlarging the sub screen area 132. As in a case of the foregoing timeline, the controller 170 may newly create favorites and arrange currently added tasks in the created favorites. Meanwhile, the controller 170 may restrict the number of tasks added to the favorites 132b. In a case where the number of tasks is restricted, if a new task is added, the controller 170 may automatically delete the earliest added task. The controller 170 also allows a user to select a task to be deleted.

An application execution menu 132c is a list of tasks associated with an application displayed on the main screen area 131. If the application execution screen 131 c is displayed on the main screen area 131, the controller 170 controls the display unit 130 to display an execution menu of a corresponding application on the sub screen area 132.

A multimedia execution menu 132e is a list of multimedia functions for a multimedia application being executed (e.g., played or paused/stopped). If a multimedia application such as an MP3 player is executed, the controller 170 creates an execution menu of the corresponding application. Accordingly, a user may operate a multimedia application through the multimedia execution menu 132e and simultaneously operate another application through the main screen area 131. For example, the user may select a music file without switching a main screen while performing web surfing. The controller 170 may further display a delete button 134 such that a user may delete the multimedia execution menu 132e. That is, if the user touches and drops the delete button 134, the controller 170 deletes the multimedia execution menu 132e. Furthermore, the controller 170 may delete a corresponding multimedia application from the main storage unit 141, and instead create and store a shortcut in the sub memory area 143.

The multimedia execution menu 132e may be classified according to a type of multimedia. For example, the multimedia execution menu 132e may include a radio listening menu, a TV watching menu, an audio playback menu, and a video playback menu. Each of these menus may include tasks for volume control, playback, stop, pause, fast forward, and fast rewind. The radio listening and TV watching menus further include tasks for frequency (channel) control.

The downloading menu 132f is a list of tasks indicating a download state of an application. The downloading menu 132f may be classified according to the type of application to be downloaded. When downloading starts, the controller 170 creates the downloading menu. If downloading is terminated (e.g, successfully completed, or failed to download), the controller 170 may delete the downloading menu and change the task list displayed on the sub screen area 132 to a menu tailored for a download termination condition. If the download was successful, this menu may include an application execution task 136, which, when touched by the user, will initiate execution of the application via the control of controller 170. Also, if the downloading is terminated, the controller 170 can display a delete button 135 such that the user may delete the downloading menu 132f. Further, the controller 170 may display a cancellation button (not shown) such that the user may cancel a download during the downloading.

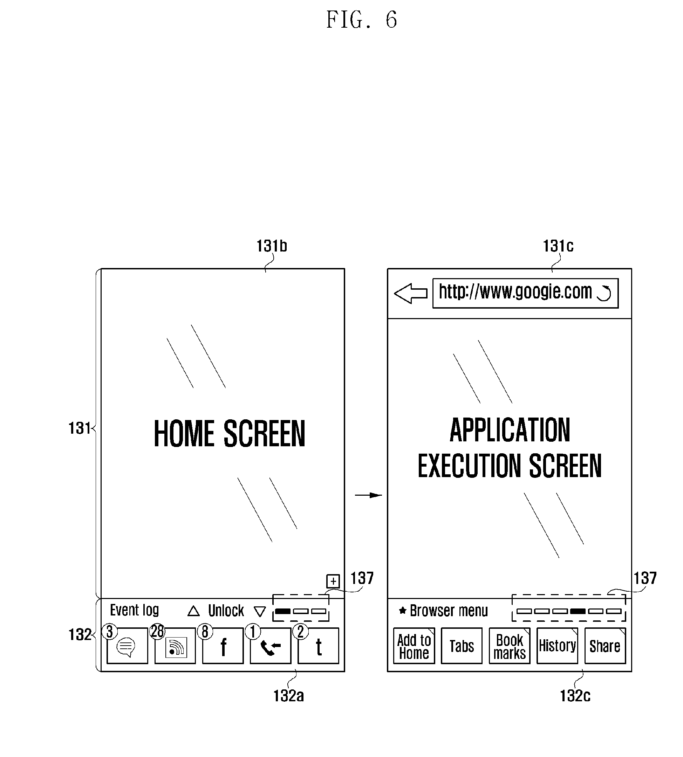

FIG. 6 is a view illustrating a method for changing a task list according to another embodiment of the present invention.

If a main screen changes, the controller 170 may automatically change a sub screen. For example, as shown in FIG. 6, if a main screen is switched from a home screen 131 b to an application execution screen 131c, the controller 170 may automatically switch a sub screen from an event log 132a to the application execution menu 132c. That is, the controller 170 may designate an event log 132a and an application execution menu 132c as defaults of the home screen 131b and the application execution screen 131 c, respectively. Further, the controller 170 may designate favorites 132b as a default of a lock screen 131 a. The defaults are not limited to the foregoing examples.

Moreover, the controller 170 may determine different task lists as a function of the main screens. For example, when an application execution screen 131c is displayed on the main screen area 131, the controller 170 may select one task list out of the entirety of existing task lists and display the selected task list on the sub screen area 132. When the home screen 131 b is displayed on the main screen area 131, the controller 170 may select and display a task list selected from an event log 132a, a timeline 132d, and a favorites list 132b on the sub screen area 132. As shown in FIG. 6, the controller 170 displays a guide 137 such that a user may recognize the number of displayable task lists and a relative location of a displayed task list.

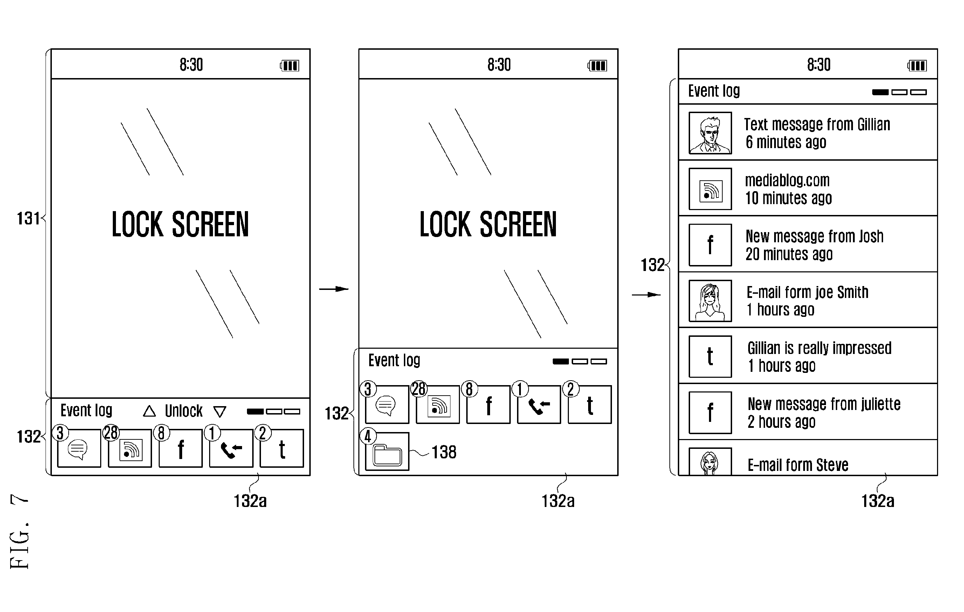

FIGS. 7-9 are views illustrating a method for enlarging a sub screen according to an exemplary embodiment of the present invention. As illustrated in FIG. 7, if a user performs a predetermined touch operation within a sub screen area 132, e.g., a drag or flick towards the left side, the controller 170 enlarges the sub screen area 132 upwards. Accordingly, at least a portion of the image displayed on the main screen area 131 is blocked In an alternative arrangement in which the sub screen area 132 is located at an upper end of the main screen area 131, it may be enlarged downwards. Thus, an enlarged direction may change according to a location of the sub screen area 132. Once the sub screen area is enlarged, if the user drags the enlarged area in the direction opposite the enlargement, the controller 170 can reduce the sub screen area 132.

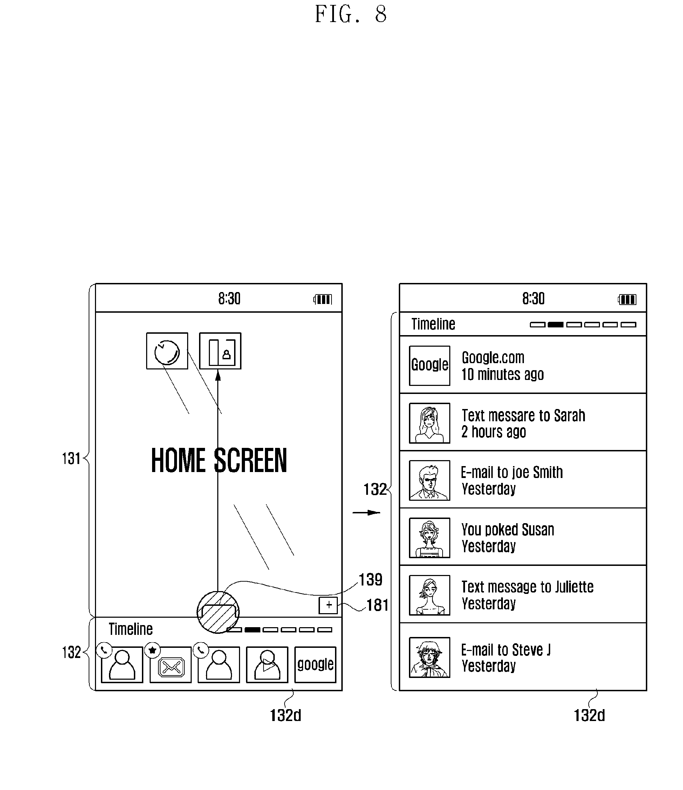

Further, if the sub screen area 132 is enlarged, the controller 170 may additionally display a task not previously displayed due to a space restriction as mentioned earlier. For example, as shown in FIG. 7, the controller 170 may display an electronic mail reception task 138 (see center view) not displayed before enlargement (left hand side view). If the sub screen area 132 is enlarged further, e.g., to an upper end of a screen, the controller 170 may display detailed information of a task as shown in the right hand side examples of FIGS. 7-9 9. Further, the controller 170 may display an indicator 139 as shown in FIG. 8 such that a user may recognize that the sub screen area 132 may be enlarged. Moreover, the controller 170 may display an enlargement button 181 as shown in FIG. 8. If the enlargement button 181 is touched, the controller 170 enlarges the sub screen area 132 to an upper end of the screen and displays detailed information of one or more tasks. Further, the controller 170 may display a reduction button (not shown) on an upper end of the screen. If the user touches and drops the reduction button, the controller 170 may reduce the sub-screen to the original size and returns to the original position.

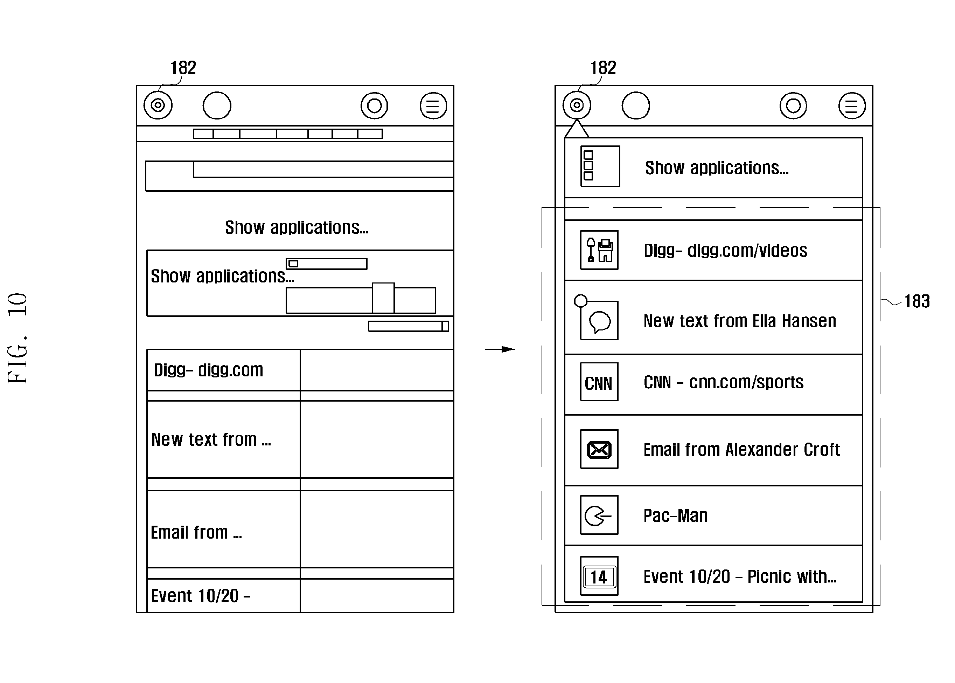

FIG. 10 is a view illustrating a method for enlarging a sub screen according to another embodiment of the present invention.

If a specific application, for example, a browser is executed while the entire screen is already divided into a main screen and a sub screen, then conventionally, only the main screen may be displayed on the entire screen. In the embodiment of FIG. 10, however, the controller 170 displays a task bar 182 allowing a user to view a sub screen on an upper end or other predetermined portion of the screen. If a user touches and drops the task bar 182, the controller 170 enlarges a specific task menu 183, for example, a timeline to display the enlarged timeline on a main screen. If the user again touches and drops the task bar 182, the controller 170 causes the display to return to the previous (non-enlarged) screen. Further, although not shown, the controller 170 may display a plurality of task bars by task lists on an upper end of the screen. That is, if a user touches and drops one of a plurality of task bars, the controller 170 enlarges the corresponding task list and displays the enlarged task list on the main screen.

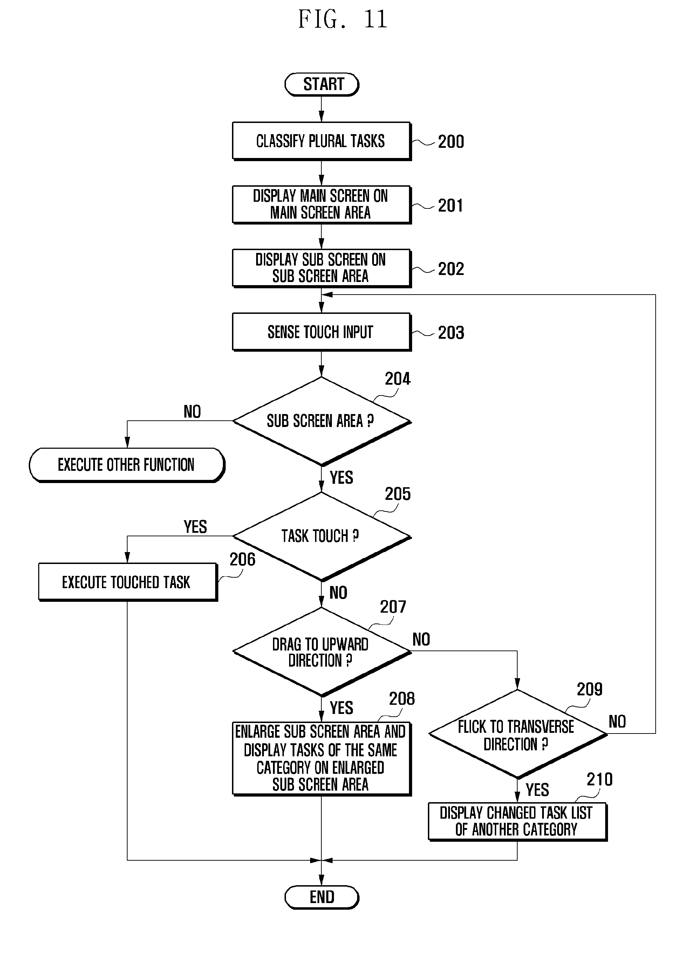

FIG. 11 is a flowchart illustrating a method for controlling a screen according to an exemplary embodiment of the present invention. A controller 170 classifies a plurality of tasks in categories (step 200). For example, the controller 170 classifies the plurality of tasks into an event log, a timeline, favorites, an application execution menu, a multimedia execution menu, and a downloading menu.

The controller 170 displays a main screen on a main screen area (step 201). That is, the controller 170 displays one of a lock screen, a home screen, or an application execution screen on the main screen area.

The controller 170 displays a sub screen on a sub screen area (step 202). That is, the controller 170 displays one of a plurality of task lists classified in categories on the sub screen area.

The controller 170 senses touch input (step 203). The controller 170 determines whether an input touch signal indicates a touch occurring on the sub screen area (step 204).

When the input touch signal indicates a touch occurring on the main screen area at step 204, the controller 170 executes a function corresponding to the input touch signal. The process then proceeds to step 205. The controller 170 determines whether the input touch signal indicates touch & drop with respect to a task (step 205).

When the input touch signal indicates the touch & drop with respect to a task at step 205, the process proceeds to step 206. The controller 170 executes a touched task (step 206). Here, the task operations and a method for executing the task were described with reference to FIG. 4 to FIG. 10 in detail.

When the input touch signal does not indicate the touch & drop with respect to a task at step 205, the process proceeds to step 207. The controller 170 determines whether the input touch signal indicates a drag to an upward direction (step 207). If yes, the process proceeds to step 208. The controller 170 enlarges the sub screen area, and displays tasks of the same category on the enlarged sub screen area in detail (step 208). Enlargement of the sub screen area and a method for displaying tasks thereon were explained with reference to FIG. 7 to FIG. 10 in detail.

When the input touch signal does not indicate a drag to an upward direction at step 207, the process proceeds to step 209. The controller 170 determines whether the input touch signal indicates a flick to a transverse direction (step 209). If yes, the process proceeds to step 210. The controller 170 changes a task list displayed on the sub screen area to a task list of a different category and displays the changed task list of the different category (step 210). Here, a plurality of tasks classified in categories and a method for changing and displaying the tasks were illustrated with reference to FIG. 4 to FIG. 6 in detail. When the input touch signal does not indicate the flick to a transverse direction at step 209, the controller 170 determines that the touch input was an error and returns to step 203.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

Although a mobile terminal and a method for controlling a screen thereof according to exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. A method for controlling a screen of a mobile terminal, comprising:
classifying a plurality of tasks in categories;
dividing the screen into a main screen area and a sub screen area;
displaying a main screen image in the main screen area and a task list associated with one of the categories in the sub screen area; and
substituting the task list displayed on the sub screen area with a task list of another category when a change command occurs.

2. The method of claim 1, wherein the change command occurs when a first touch operation is sensed.

3. The method of claim 2, further comprising enlarging the sub screen area when a second touch operation is sensed, and displaying additional tasks of the same category on the enlarged sub screen area.

4. The method of claim 3, wherein the first and second touch operations are distinguished from each other according to a direction of touch operation.

5. The method of claim 4, wherein the first touch operation is a flick to a transverse direction and the second touch operation is a drag to a longitudinal direction.

6. The method of claim 1, wherein the categories include at least two of an event log, a timeline, a favorites list, an application execution menu, a multimedia execution menu, and a downloading menu.

7. The method of claim 6, wherein the event log is a list of tasks reporting an event in which an application is generated, the timeline is a list of tasks executed by a user, the favorites list is a list of tasks designated by the user, the application execution menu is a list of tasks of an application displayed on the main screen area, the multimedia execution menu is a list of multimedia that is executed or in which an execution is stopped, and the downloading menu is a list of tasks indicating a downloading state of an application.

8. The method of claim 7, wherein the main screen image is one of a lock screen, a home screen, and an application execution screen; and
said displaying a task list associated with one of the categories comprises displaying a task list previously designated as a default of the main screen among the event log, the timeline, the favorites, the application execution menu, the multimedia execution menu, and the downloading menu.

9. A mobile terminal comprising:
a touch screen generating a touch signal;
a controller classifying a plurality of tasks in categories; and
a display unit dividing the screen into a main screen area and a sub screen area, displaying a main screen image on the main screen area, and displaying a first task list associated with one of the categories on the sub screen area;
wherein the controller controls the display unit to display a second task list of another category on the sub screen area, when a touch signal input from the touch screen is a touch operation for changing a category.

10. The mobile terminal of claim 9, wherein the touch operation for changing a category is a first touch operation, and the controller is further configured to cause the display to enlarge the sub screen area when a second touch operation is sensed, and to display tasks of the same category on the enlarged sub screen area.

11. The mobile terminal of claim 10, wherein the first touch operation and the second touch operation are distinguished from each other according to a direction of touch operation.

12. The mobile terminal of claim 11, wherein the first touch operation and the second touch operation are distinguished from each other according to a form of a touch.

13. The mobile terminal of claim 9, wherein the controller classifies the plurality of tasks into at least two of an event log, a timeline, a favorites list, an application execution menu, a multimedia execution menu, and a downloading menu.

14. The mobile terminal of claim 13, wherein the event log is a list of tasks reporting an event in which an application is generated, the timeline is a list of tasks executed by a user, the favorites list is a list of tasks designated by the user, the application execution menu is a list of tasks of an application displayed on the main screen area, the multimedia execution menu is a list of multimedia that is executed or in which an execution is stopped, and the downloading menu is a list of tasks indicating a downloading state of an application.

15. The mobile terminal of claim 9, further comprising a main storage unit in which an application is loaded,
wherein the controller deletes the application which is loaded in the main storage unit from the main storage unit when the application is terminated, and instead stores shortcut information associated with a task executing the application in the main storage unit, and controls the display unit to display an execution screen of a task associated with the shortcut information when the application is again executed.
